# EUROPEAN PATENT APPLICATION

(11) **EP 1 053 814 A2**
(43) Date of publication of application: **22.11.2000**
(21) Application number: 00850074.6
(22) Date of filing: 26.04.2000
(51) Int. Cl.: B23D 61/00, B23C 5/18

(54) **Cutting tooth**

(30) Priority: 10.05.1999 US 307558
(71) Applicant: Kapman AB, 811 81 Sandviken (SE)
(72) Inventor: Hayden, Robert C., Jr., Branford, Connecticut (US); Hakan, Hellbergh, 531 53 Lidköping (SE)
(74) Representative: Taquist, Lennart

(57) **Abstract**

A metal cutting tool such as a saw blade or a groove cutting tool has teeth with a main edge (14) and side edges (15,16), where the main edge is rounded by an abrasive method to have a larger radius, and the side edges have a smaller radius produced by smooth grinding of at least a portion (23) of the side faces (13) after the abrasive rounding.

## Description

### Background

It has been long known that for cutting edges of tools, such as saws, there is an optimal degree of sharpness, as expressed by the radius measured in a cross section through the edge. The optimal radius depends on the material to be cut, on the material of the edge, on the depth of cut and on the geometry.

Too large radius will cause too large cutting force and irregular chips, which in turn will produce irregular surfaces with bad precision. Too small radius will make the cutting edge vulnerable to fracture and cracking, and will vibrate causing scratches and cracks in the cut surface. An optimal radius will, when cutting metals, allow formation of a small built-up edge from the cut material around the actual edge, protecting the latter from wear and cracking. Normal values for the edge radius are 15 - 60 microns for cutting of metals. If the edge of a fresh tool is sharper than that, it will need a running-in period when the edge rounding will gradually be produced by wear, and during this period the cutting must be done with reduced feed.

Another requirement for reduction of edge cracking is that the direction of the chip flow is well defined and continuous. If two flows of cut material meet with different directions, there will be very high and fluctuating local pressure, which will cause damage and local erosion and cratering of the rake face near the edge. This occurs where two edges meet at a corner.

The present invention concerns a shape of a cutting tool edge that will ensure a unique chip flow to reduce the edge wear near the corner, and a method to produce such an edge shape. The tool to be provided with this type of edge can be a band saw, a circular saw, a parting or grooving tool, or an insert to be used in such a tool.

### Description

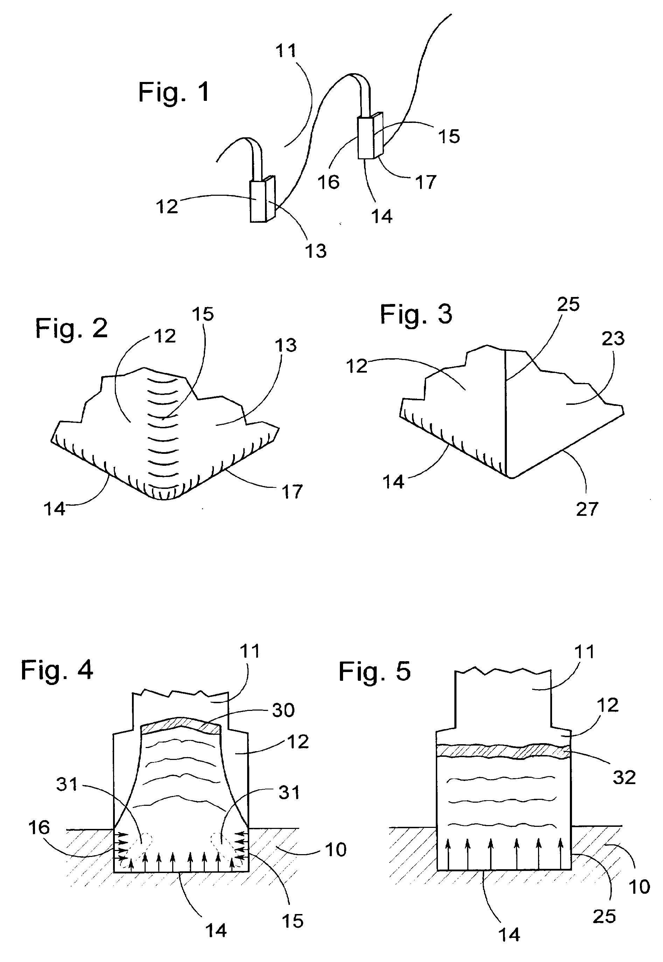

A cutting tool edge according to the invention is described with reference to the figures, where figure 1 shows the general outline and location of the edge on a saw blade, figure 2 and 3 show in magnification a corner of a tooth during two successive stages in producing such an edge, where figure 2 also represents prior art, figure 4 and 5 show the chip flow near a corner according to prior art and according to the invention.

Figure 1 shows part of a saw blade body (11) with teeth, where the teeth are provided with cutting tips, in the figure shown as separate tips from a wear resisting material such as cemented carbide brazed or welded onto the blade body. The tips could also be integral parts of the blade body, or separate inserts held in seats in the blade body. Each tip has a rake face (12) and one side face (13) on each side. Each tip has one main cutting edge (14), two side edges (15,16) and one clearance edge (17) on each side.

Figure 2 shows a close-up view of a comer where a main edge (14), a side edge (15) and a clearance edge (17) meet. Most of the cutting effort and the cutting force occurs on the main edge (14), and it has been shown that in order to get smooth cutting and longer life of the tip, the edge should be slightly rounded by abrasive methods such as abrasive brushing or blasting. This will remove micro-cracks and similar defects from the manufacture of the tip, and provide a rounded area where a small and stable built-up edge will form during cutting.
Since the whole tip is given the abrasive treatment, the side edges (15,16) and the clearance edges (17) will also be similarly rounded, which has been regarded as beneficial.

According to the present invention, however, the side faces (13) are after the abrasive rounding ground off to create new smooth side faces (23) as shown in figure 3, and to remove the rounding of at least the side edges (15) to create new very sharp edges (25). The clearance edges will also become sharp, at least at the portions (27) close to the main edge (14).

The main effect of this concerns the flow direction of the chips. When a tooth tip according to prior art is penetrating a material (10) to be cut, as shown in figure 4, there will be chips flowing from the main edge (14) parallel to the side edges, and from the side edges (15) parallel to the main edge. Where those chip flows meet, there will occur a local pressure peak (31) large enough to deflect, deform and merge the chip flows to create one non-flat chip with a more or less V-shaped cross-section (30). If the cutting depth is great as in machining of grooves, this will have the advantage of making the chips straight and narrow, allowing them to flow easily out of the groove, which is often so important that the extra wear due to the pressure peaks (31) will be accepted. At other times, the depth of cut will be smaller, especially in sawing of metals, and it will then be preferred to have flat chips which will form compact curls to be carried out from the cut by the saw teeth. By making the tooth tips as in figure 3, there will surprisingly be no chip formation at the side edges (25) in spite of their sharpness, but only a smooth chip flow from the main edge (14) as shown in figure 5, with a flat cross-section (32), and no local pressure peaks. The result will be lower cutting forces, easier chip handling and less tooth wear. When those chips break and curl, they will form compact rolls, but with a certain risk of friction against the kerf sides, which can be accepted since they are transported out of the cut by the tooth gullets.

The main edge (14) is preferably straight to get the smoothest chip flow, but it may also be convex or differ between successive teeth to reduce lateral vibrations. The original side faces (13) may preferably be made with longitudinal and vertical clearance angles as in prior art, and the smoothly ground portion of the side faces (23) should preferably have smaller or zero clearance angles, since it needs not extend higher than the cutting depth. The original side faces (13) may be flat or parts of a spherical surface.

Some teeth may have chamfers, and in such cases there will usually be very little chip flow where the chamfer meets the side face, and it is preferred to make the chamfer smoothly ground to get a unique chip flow direction where the chamfer meets the main edge.

Metal saw blades according to the invention can be made by a method employing normal production steps but in a partly altered order as follows, for a blade with carbide tips: Forming tooth contours and gullets by milling or grinding - forming tip seats - attaching carbide tips - grinding of at least rake and clearance faces of the tips - abrasive rounding of edges - grinding of side surfaces of the tips. If some of the tips are to have chamfers, those should be ground in a last operation after the side surfaces, which can then serve as reference to allow high precision. If some teeth are to bet set, which is known from prior art, the setting should be done after the grinding of the side surfaces.

The abrasive rounding is preferably done with abrasive brushing in two directions, first from the clearance face towards the edge, secondly from the rake face towards the edge.

## Claims

1. Tool for metal cutting, comprising one or more teeth, each tooth having a tip made with a rake face (12), two side faces (13), a main edge (14) and two side edges (15,16), each edge having an edge radius, characterized by the main edge having a larger radius produced by an abrasive treatment, and the side edges having a smaller radius produced by smooth grinding of at least the portion of the side faces nearest to the main edge subsequent to the abrasive treatment.

2. Tool according to claim 1, where the teeth are teeth of a saw blade.

3. Tool according to claim 2, where the tip is a piece of cemented carbide attached to the tooth.

4. Tool according to claim 1, where the tooth is a groove cutting tool.

5. Tool according to claim 1, where the tooth is a parting tool.

6. Tool according to claim 1, where the side faces have longitudinal or vertical clearance angles or both.

7. Tool according to claim 6, where the smoothly ground portion of the side faces has smaller clearance angles than the remaining portion of the side faces.

8. Tool according to claim 6, where at least one clearance angle of the smoothly ground portion of the side faces is zero.

9. Tool according to claim 2, where the whole side faces are ground with zero clearance angle flush with the body of the saw blade before setting.

10. Tool according to claim 1, where the abrasive treatment is brushing

11. Tool according to claim 10, where the brushing is done in two steps, one on each face adjoining the main edge.

12. Tool according to claim 2, where at least some teeth have ground chamfers between the main edge and the side edges.
